# FASCICULE DE BREVET EUROPEEN

(11) **EP 2 516 041 B1**
(45) Date de publication et mention de la délivrance du brevet: **30.04.2014**
(21) Numéro de dépôt: 10808911.1
(22) Date de dépôt: 21.12.2010
(51) Int. Cl.: B01D 53/26, C01B 31/20, F25J 3/02

(54) **PROCÉDÉ ET APPAREIL DE SÉCHAGE ET DE COMPRESSION D'UN FLUX RICHE EN CO2**
VERFAHREN UND VORRICHTUNG ZUM TROCKNEN UND KOMPRIMIEREN EINES CO2-REICHEN STROMS
METHOD AND APPARATUS FOR DRYING AND COMPRESSING CO2-RICH FLOW

(30) Priorité: 22.12.2009 FR 0959370
(43) Date de publication de la demande: 31.10.2012
(73) Titulaire: L'Air Liquide Société Anonyme pour l'Etude et l'Exploitation des Procédés Georges Claude, 75007 Paris (FR)
(72) Inventeur: BRIGLIA, Alain, F-49140 Corze (FR); DARDE, Arthur, F-75005 Paris (FR)
(74) Mandataire: Mercey, Fiona Susan
(86) Numéro de dépôt international: PCT/FR2010/052858
(87) Numéro de publication internationale: WO 2011/086289

(56) Documents cités:
- WO-A1-2009/127217
- GB-A- 877 091
- US-A- 2 862 819
- US-A- 4 252 548
- US-A- 4 704 146
- US-A1- 2002 117 391

## Description

La présente invention est relative à un procédé et à un appareil de séchage et de compression d'un flux riche en CO₂.

La compression de flux riches en CO₂ et humides nécessite l'utilisation de compresseur en acier inoxydable - voire en matériaux plus nobles encore, comme les aciers à haute teneur en nickel - afin d'éviter la corrosion par l'acide carbonique, ou d'autres acides plus forts qui découleraient de la présence d'impuretés dans le flux riche en CO₂, comme les oxydes d'azote ou de soufre.

Un fluide riche en CO₂ contient entre 1 % molaire et 100 % molaire en base sèche de CO₂. L'air ambiant est 25 fois plus pauvre en CO₂ que la limite basse de 1% molaire.

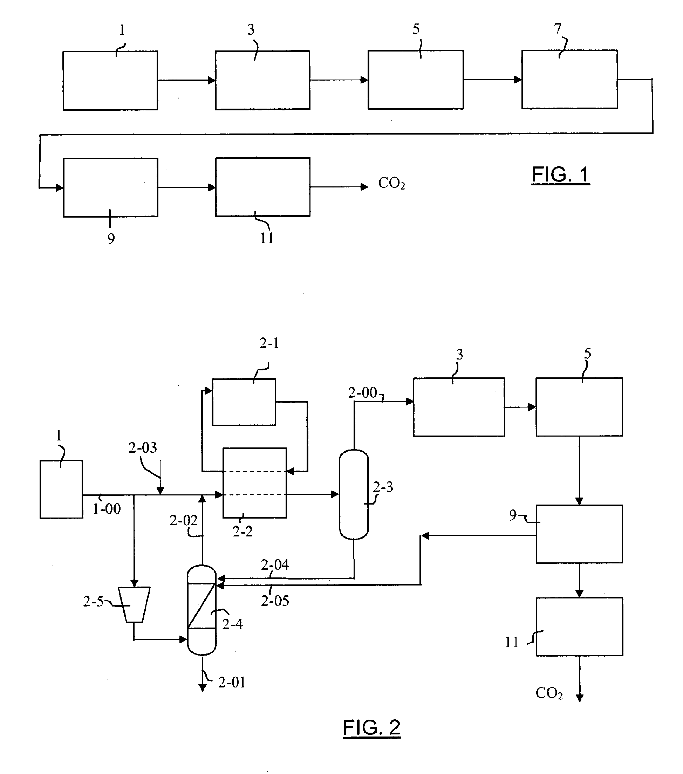

C'est ainsi que l'état de l'art pour le traitement de tels flux riches en CO₂ est schématiquement représenté comme sur la figure 1.
- 1 = Mise à disposition du flux riche en CO₂ (exemples : sortie d'une colonne de régénération d'un solvant (type amines) ou fumées d'oxycombustion après un filtre primaire de type électrostatique ou de filtre à manche)
- 3 = étape facultative d'épuration fine (jusqu'à un niveau typique de l'ordre de la partie par million) en élément soufrés
- 5 = compression dans un compresseur dont les matériaux en contact avec le gaz humide sont en acier résistant à la corrosion
- 7 = séchage du gaz par adsorption (par exemple adsorbant de type alumine activée, tamis moléculaire, silica-gel)
- 9 = épuration facultative du gaz riche en CO₂ de ses constituants légers (oxygène, argon, hydrogène, monoxyde de carbone, azote, etc) et/ou de ses constituants plus lourds (NO₂, N₂O₄, SO₂, etc.), les variantes possibles de cette étape sont abondamment décrites dans de précédentes demandes de brevet
- 11 = étape de compression du produit final riche en CO₂ ou de liquéfaction du produit final riche en CO₂ afin de le mettre à disposition d'un organe de transport (par canalisation ou bateau) ou pour son utilisation dans un procédé.

Il est connu de US-A-2862819 de séparer un débit de gaz riche en CO₂ par distillation, après l'avoir mélangé avec un agent anti-gel avant de le comprimer dans un compresseur.

Selon un objet de l'invention, il est prévu un procédé de compression d'un fluide riche en CO₂ contenant de l'eau dans lequel le fluide riche en CO₂ est comprimé dans un compresseur , en amont de l'étape de compression, le fluide riche en CO₂ contenant de l'eau est divisé en deux, un agent anti-gel est injecté dans une première partie du fluide riche en CO₂ contenant de l'eau, une deuxième partie du fluide riche en CO₂ est envoyé en cuve d'une colonne de dégazage et un gaz de tête de la colonne est mélangé avec la première partie du fluide riche en CO₂ contenant l'agent anti-gel, la première partie est refroidie puis envoyée dans un séparateur de phases, de l'eau contenant de l'agent anti-gel est extraite du séparateur de phases et envoyée en tête de la colonne et le fluide refroidi épuré d'eau dans le séparateur de phases est comprimé dans le compresseur.

Eventuellement :
- le compresseur est en acier carbone ou faiblement allié.
- on traite l'eau contenant de l'agent anti-gel dans la colonne afin d'en extraire la majeure partie de l'agent anti-gel qui est recyclé en amont de l'étape de refroidissement.
- le gaz à l'entrée du séparateur de phases est à entre -35°C et -15°C, voire entre -25°C et -15°C
- en aval du compresseur, on sépare le fluide comprimé à une température inférieure à la température de solidification de l'eau 0°C, préférablement inférieure à -10°C sans l'avoir séché par adsorption en amont.
- on récupère des condensats riches en eau et contenant de l'agent anti-gel lors de la séparation à une température inférieure à 0°C et on recycle l'agent anti-gel après extraction en amont de l'étape de refroidissement.
- on récupère des condensats riches en eau et contenant de l'agent anti-gel lors de la séparation à une température inférieure à -10°C et on recycle l'agent anti-gel après extraction en amont de l'étape de refroidissement.
- l'agent anti-gel est extrait dans la colonne.
- le fluide riche en CO₂ contient moins que 100ppm v d'oxydes de soufre, ou moins que 2000ppm v d'oxydes de soufre , voire moins que 20000ppm v d'oxydes de soufre.

Selon un autre aspect de l'invention, il est prévu un appareil de compression d'un fluide riche en CO₂ contenant de l'eau comprenant un compresseur , et en amont du compresseur une conduite d'amenée d'un agent anti-gel pour injecter l'agent dans une première partie du fluide riche en CO₂ contenant de l'eau, des moyens de refroidissement du fluide riche en CO₂ contenant l'agent anti-gel, un séparateur de phases pour extraire de l'eau du fluide refroidi, une colonne de dégazage, des moyens pour envoyer une deuxième partie du fluide riche en CO₂ contenant de l'eau en cuve de la colonne, des moyens pour envoyer de l'eau du séparateur de phases en tête de la colonne, des moyens pour envoyer le gaz de tête de la colonne pour être mélangés avec la première partie en amont des moyens des refroidissement et des moyens pour envoyer le fluide refroidi épuré en eau au compresseur.

Le compresseur est éventuellement en acier carbone.

L'appareil peut comprendre un compresseur pour comprimer la deuxième partie en amont de la colonne.

Par ce moyen il n'est pas nécessaire de traiter tout le fluide riche en CO₂ dans une colonne de distillation mais seulement la partie destinée à épurer le mélange d'eau et d'anti-gel dans la colonne de dégazage.

La présente invention vise à réduire considérablement le coût de l'unité de compression 5 et éventuelle unité de purification 3 du flux riche en CO₂ en retirant suffisamment d'eau en amont de l'étape de compression 5 pour éviter la condensation de celle-ci durant les phases de compression et refroidissement successives dans le compresseur, cela permettant l'utilisation d'acier carbone ou faiblement allié, au lieu d'acier inoxydable.

Un deuxième aspect de l'invention consiste à réduire le coût de l'unité de séchage 7 lorsqu'une purification par condensation partielle et éventuelle distillation est souhaitée pour améliorer la composition du CO₂ produit. Cette unité a pour vocation essentielle de retirer suffisamment d'eau du flux riche en CO₂ pour éviter le gel de cette eau lors du refroidissement dans l'unité 9. Des teneurs résiduelles en eau de l'ordre de la partie par million peuvent ainsi être nécessaires pour éviter le gel à -56°C, une température plancher en raison de la solidification du CO₂.

Dans un premier temps, considérons comment se passer de l'unité de séchage, tout en refroidissant à environ -55°C le flux riche en CO₂.

L'invention consiste à injecter un agent anti-gel - du méthanol par exemple - en quantité suffisante pour que le point de solidification de l'eau soit inférieur à la température la plus froide de l'unité 9 (par exemple pour un point de solidification de l'eau de - 54°C, il faut injecter au moins 1 kg de méthanol, pour 1 kg d'eau contenu dans le gaz) puis à refroidir le mélange jusqu'à la température souhaité.

Une amélioration consiste à refroidir le gaz contenant l'agent anti-gel jusqu'à une température intermédiaire, par exemple entre -35°C et -15°C, bien sûr supérieure à la température finale souhaitée, de telle façon qu'une fraction significative de l'eau, et de l'agent anti-gel contenu soit condensée et ainsi recyclée, limitant la consommation de l'agent anti-gel. Plus la température atteinte est froide, et plus la condensation de l'eau est importante. Le gaz résultant de cette condensation intermédiaire est refroidi ensuite jusqu'aux températures souhaitées pour la suite du procédé.

On peut envisager une seconde injection d'agent anti-gel après cette première condensation selon les fractions résultantes d'eau et d'agent anti-gel dans la phase gazeuse. L'intérêt d'une injection multiple sera de réduire la quantité totale à injecter car chaque injection sera adaptée à la condensation qui suit. Le système devenant cependant plus complexe, une étude technico-économique jugera de l'intérêt de multiplier les injections d'agent anti-gel.

Une approche similaire permet de retirer suffisamment d'eau avant la compression pour utiliser un compresseur en acier carbone ou faiblement allié. Il s'agît donc de refroidir le flux riche en CO₂ jusqu'à ce que la fraction restante en eau assure que le point de rosée ne sera jamais atteint dans les différents étages de compression et refroidissement du compresseur. Ainsi un refroidissement à -15°C et 0.9 bar absolu d'un flux contenant environ 90% de CO₂ en volume et en base sèche permet d'abaisser le point de rosée à la sortie du compresseur (20 bars absolus dans notre exemple) à moins de 30°C, soit une température dont on peut facilement s'assurer qu'elle ne sera pas atteinte lors des refroidissements aux inter-étages et en sortie du compresseur. Un contrôle de la température du flux comprimé par régulation du débit d'eau de réfrigération en fonction de la température du gaz en sortie du réfrigérant est un exemple permettant de maintenir le flux comprimé au-delà du point de rosée et donc de la zone de corrosion.

Par rapport à l'existant, il faut donc ajouter des moyens d'injection d'un agent anti-gel dans le flux riche en CO₂, ainsi que des moyens de réfrigération poussée pour atteindre des températures de l'ordre de -15°C à faible pression (en générale une pression proche de la pression atmosphérique).

Les avantages de cette invention sont multiples :
- Le compresseur et les réfrigérants inter-étages sont donc en acier carbone ou faiblement allié.
- La température d'aspiration est notablement abaissée par rapport à l'état de l'art : entre une aspiration à 20°C et une aspiration à -15°C, le débit volumique - et donc la taille de la première roue de compression, qui définit la taille du compresseur, diminue de 7% si l'on considère 100mbars de perte de charge pour la réfrigération (de 1 bar absolu à 0.9bar a). Cela se traduit par un gain en investissement sur la machine.
- La température d'aspiration est stabilisée au cours de l'année, ce qui permet d'opérer exactement aux conditions de conception et donc d'améliorer l'efficacité moyenne de la machine.
- Le compresseur ne doit pas être dimensionné sur une température d'aspiration élevée qui ne sera rencontrée que quelques jours dans l'année.
- La puissance de compression est notablement réduite, à la fois par l'absence de l'essentiel des molécules d'eau et par l'aspiration plus froide.
- Le compresseur joue le rôle d'un mélangeur très efficace pour l'agent anti-gel dans le gaz à traiter. Cela est primordial en amont de l'unité de purification 9, car la teneur en eau résiduelle étant très faible (de l'ordre de quelques centaines de parties par million), la quantité d'agent anti-gel à injecter est aussi très faible, ce qui rend l'injection de l'agent anti-gel très délicate, car il faut s'assurer que le mélange soit très homogène (anti-gel dans le gaz).
- Il se trouve en effet que la fraction d'agent anti-gel restant en phase vapeur est sensiblement la même que la fraction d'eau et assure ainsi que les injections intermédiaires d'agent anti-gel sont superflues.
- On évite un coûteux équipement de séchage par adsorption.
- On évite la pénalité énergétique de la régénération de l'unité d'adsorption.

Une autre variante de l'invention consiste à considérer qu'en absence d'eau, les oxydes de soufre et les oxydes d'azote ne vont pas se condenser sous forme d'acide. En ce qui concerne l'acide nitrique, son point de rosée étant proche de celui de l'eau, la situation ne change pas, en première approximation, qu'on les considère ou pas. En ce qui concerne l'acide sulfurique, son point de rosée varie entre 70°C et 150°C environ selon les pressions et concentrations considérées.

L'invention consiste donc à ne pas épurer le flux riche en CO₂ en oxyde de soufre avant la compression. Les oxydes de soufre seront alors soit séparés à haute pression, par distillation par exemple, soit co-séquestrés avec le CO₂ si c'est l'application choisie pour le CO₂.

Le gain sur l'unité de production du gaz riche en CO₂ peut être considérable si l'on considère une centrale électrique au charbon où il deviendrait envisageable de ne pas retirer le SO₂ du flux qui sera extrait pour séquestration.

Il reste à mentionner le cycle de l'agent anti-gel. L'essentiel de l'agent anti-gel sera condensé avec l'eau, ainsi que d'autres impuretés du flux riche en CO₂. Une régénération de l'agent anti-gel est possible en utilisant un contacteur gaz/liquide, qui utilisera une partie du gaz riche en CO₂ pris avant toute injection d'agent anti-gel. Le contacteur permettra de récupérer la quasi-intégralité de l'agent anti-gel. Le gaz est alors mélangé avec le reste du gaz riche en CO₂ réduisant ainsi l'appoint en agent anti-gel aux fractions extrêmement réduites restant dans le produit et dans les condensats.

Les condensats peuvent être envoyés à la chaudière, si chaudière il y a, pour destruction des traces de l'agent anti-gel.

Enfin, les traces d'agent anti-gel et d'eau restant dans le produit riche en CO₂ ne devraient pas gêner la séquestration de ce dernier, ni même son utilisation pour de la récupération assistée de pétrole (Enhanced Oil Recovery). Il est à noter cependant que proche du point critique du CO₂ (74 bars absolus et 31,1°C) les agents anti-gel (en général des alcools, et notamment le méthanol) et l'eau forment des phases liquides indépendantes du CO₂ qui peut être soit liquide soit gazeux. Une récupération d'une fraction supplémentaire d'agent antigel accompagnant une amélioration de la pureté du produit CO₂ est donc à envisager.

La Figure 2 illustre un procédé selon l'invention.

Un fluide 1-00 riche en CO₂ et humide est divisé en deux. Une partie est envoyée à une soufflante 2-5 alimentant une colonne de dégazage 2-4. Un appoint d'agent anti-gel 2-03 par exemple du méthanol est rajouté au reste du fluide riche en CO₂. Le mélange est refroidi dans un échangeur 2-2 à une température entre -35°C et -15°C et envoyé à un séparateur de phases 2-3 pour en séparer les condensats riches en agent anti-gel. Ces condensats sont envoyés à la colonne 2-4 et le gaz de tête 2-02 recyclé vers le fluide riche en CO₂ et humide. Le liquide de cuve 2-01 riche en anti-gel est renvoyé au refroidissement dans l'échangeur 2-2 pour limiter la consommation d'agent anti-gel. L'échangeur 2-2 est refroidi par un groupe frigorifique. Il est de préférence du type échangeur à plaques d'aluminium brasées. Eventuellement, afin de réduire les coûts opératoires, le fluide riche en CO₂ peut être refroidi en plusieurs étapes, soit plusieurs refroidissements en série (eau de réfrigération, R134a, ammoniaque).

Le gaz de tête 2-00 du séparateur 2-3 est envoyé éventuellement à une étape d'épuration fine comme dans l'art antérieur et ensuite le gaz est comprimé dans un compresseur 5 en acier carbone ou faiblement allié. Ensuite suivent éventuellement une épuration facultative 9 du gaz riche en CO₂ de ses constituants légers (oxygène, argon, hydrogène, monoxyde de carbone, azote, etc.) et/ou de ses constituants plus lourds (NO₂, N₂O₄, SO₂, etc.), les variantes possibles de cette étape sont abondamment décrites dans de précédentes demandes de brevet et éventuellement une étape de compression 11 du produit final riche en CO₂ ou de liquéfaction du produit final riche en CO₂ afin de le mettre à disposition d'un organe de transport (par canalisation ou bateau) ou pour son utilisation dans un procédé.

De préférence le fluide riche en CO₂ à traiter par le procédé de l'invention ne contient pas de NO₂.

## Revendications

1. Procédé de compression d'un fluide riche en CO₂ contenant de l'eau dans lequel le fluide riche en CO₂ est comprimé dans un compresseur (5), en amont de l'étape de compression, le fluide riche en CO₂ contenant de l'eau est divisé en deux, un agent anti-gel est injecté dans une première partie du fluide riche en CO₂ contenant de l'eau, une deuxième partie du fluide riche en CO₂ est envoyé en cuve d'une colonne de dégazeage (2-4) et un gaz de tête de la colonne est mélangé avec la première partie du fluide riche en CO₂ contenant l'agent anti-gel, la première partie est refroidie puis envoyée dans un séparateur de phases (2-3), de l'eau (2-04) contenant de l'agent anti-gel est extraite du séparateur de phases et envoyée en tête de la colonne et le fluide refroidi épuré d'eau (2-00) dans le séparateur de phases est comprimé dans le compresseur.

2. Procédé selon la revendication 1 dans lequel le compresseur (5) est en acier carbone ou faiblement allié.

3. Procédé selon l'une des revendications précédentes dans lequel, on traite l'eau contenant de l'agent anti-gel dans la colonne (2-4) afin d'en extraire la majeure partie de l'agent anti-gel (2-01) qui est recyclé en amont de l'étape de refroidissement.

4. Procédé selon l'une des revendications précédentes dans lequel, en aval du compresseur (5), on sépare le fluide comprimé à une température inférieure à la température de solidification de l'eau 0°C, préférablement inférieure à -10°C sans l'avoir séché par adsorption en amont.

5. Procédé selon la revendication 4 dans lequel on récupère des condensats riches en eau et contenant de l'agent anti-gel (2-05) lors de la séparation à une température inférieure à 0°C et on recycle l'agent anti-gel après extraction en amont de l'étape de refroidissement.

6. Procédé selon la revendication 4 dans lequel on récupère des condensats riches en eau et contenant de l'agent anti-gel (2-05) lors de la séparation à une température inférieure à -10°C et on recycle l'agent anti-gel après extraction en amont de l'étape de refroidissement.

7. Procédé selon l'une des revendications 5 et 6 dans lequel l'agent anti-gel est extrait dans la colonne (2-4).

8. Procédé selon l'une des revendications précédentes dans lequel le fluide riche en CO₂ (1-00) contient moins que 100ppm v d'oxydes de soufre , ou moins que 2000ppm v d'oxydes de soufre , voire moins que 20000ppm v d'oxydes de soufre.

9. Procédé selon l'une des revendications précédentes dans lequel le gaz à l'entrée du séparateur de phases (2-3) est à entre -35°C et -15°C, voire entre -25°C et -15°C.

10. Appareil de compression d'un fluide riche en CO₂ contenant de l'eau comprenant un compresseur (5), **caractérisé en ce qu'**il comprend en amont du compresseur une conduite d'amenée (2-03) d'un agent anti-gel pour injecter l'agent dans une première partie du fluide riche en CO₂ contenant de l'eau, des moyens de refroidissement (2-2) du fluide riche en CO₂ contenant l'agent anti-gel, un séparateur de phases (2-3) pour extraire de l'eau du fluide refroidi, une colonne de dégazage (2-4), des moyens pour envoyer une deuxième partie du fluide riche en CO₂ contenant de l'eau en cuve de la colonne, des moyens pour envoyer de l'eau (2-04) du séparateur de phases en tête de la colonne, des moyens pour envoyer le gaz de tête de la colonne pour être mélangé avec la première partie en amont des moyens des refroidissement et des moyens pour envoyer le fluide refroidi épuré en eau au compresseur.

11. Appareil selon la revendication 10 dans lequel le compresseur est en acier carbone ou acier faiblement allié.

12. Appareil selon l'une des revendications 10 et 11 comprenant un compresseur (2-5) pour comprimer la deuxième partie en amont de la colonne (2-4).

## Patentansprüche

1. Verfahren zum Verdichten eines CO₂-reichen Fluids, das Wasser enthält, bei dem das CO₂-reiche Fluid in einem Verdichter (5) verdichtet wird, das CO₂-reiche Fluid, das Wasser enthält, stromaufwärts des Verdichtungsschritts zweigeteilt wird, ein Gefrierschutzmittel in einen ersten Teil des CO₂-reichen Fluids, das Wasser enthält, eingespritzt wird, ein zweiter Teil des CO₂-reichen Fluids in den Sumpf einer Entgasungskolonne (2-4) geleitet wird und ein Gas aus dem Kolonnenkopf mit dem ersten Teil des CO₂-reichen Fluids, welches das Gefrierschutzmittel enthält, gemischt wird, der erste Teil abgekühlt wird und dann in einen Phasenabscheider (2-3) geleitet wird, Wasser (2-04), welches das Gefrierschutzmittel enthält, dem Phasenabscheider entzogen wird und in den Sumpf der Kolonne geleitet wird und das abgekühlte Fluid, das in dem Phasenabscheider von Wasser (2-00) gereinigt wurde, in dem Verdichter verdichtet wird.

2. Verfahren nach Anspruch 1, bei dem der Verdichter (5) aus Carbonstahl oder aus schwachlegiertem Stahl ist.

3. Verfahren nach einem der vorhergehenden Ansprüche, bei dem das Wasser, welches das Gefrierschutzmittel enthält, in der Kolonne (2-4) behandelt wird, um ihm den größten Teil des Gefrierschutzmittels (2-01) das stromaufwärts des Abkühlungsschritts wiederverwertet wird, zu entziehen.

4. Verfahren nach einem der vorhergehenden Ansprüche, bei dem das Fluid, das bei einer Temperatur verdichtet wurde, die niedriger als die Verfestigungstemperatur von Wasser von 0 °C, vorzugsweise unter -10 °C ist, stromabwärts des Verdichters (5) abgeschieden wird, ohne dass es stromaufwärts durch Adsorption getrocknet wurde.

5. Verfahren nach Anspruch 4, bei dem stark wasserhaltige, Gefrierschutzmittel (2-05) enthaltende Kondensate bei der Abscheidung bei einer Temperatur von unter 0 °C rückgewonnen werden und das Gefrierschutzmittel nach dem Entziehen stromaufwärts des Abkühlungsschritts wiederverwertet wird.

6. Verfahren nach Anspruch 4, bei dem stark wasserhaltige, Gefrierschutzmittel (2-05) enthaltende Kondensate bei der Abscheidung bei einer Temperatur von unter -10°C rückgewonnen werden und das Gefrierschutzmittel nach dem Entziehen stromaufwärts des Abkühlungsschritts wiederverwertet wird.

7. Verfahren nach einem der Ansprüche 5 und 6, bei dem das Gefrierschutzmittel in der Kolonne (2-4) entzogen wird.

8. Verfahren nach einem der vorhergehenden Ansprüche, bei dem das CO₂-reiche Fluid (1-00) mindestens 100 ppmv Schwefeloxide oder mindestens 2000 ppmv Schwefeloxide oder sogar 20000 ppmv Schwefeloxide enthält.

9. Verfahren nach einem der vorhergehenden Ansprüche, bei dem das Gas am Eingang des Phasenabscheiders (2-3) zwischen -35 °C und -15 °C oder sogar zwischen -25 °C und -15 °C hat.

10. Gerät zum Verdichten eines CO₂-reichen Fluids, das Wasser enthält, das einen Verdichter (5) umfasst, **dadurch gekennzeichnet, dass** es stromaufwärts des Verdichters Folgendes umfasst: eine Zuleitung (2-03) für ein Gefrierschutzmittel, um das Mittel in einen ersten Teil des CO₂-reichen Fluids, das Wasser enthält, einzuspritzen, Mittel zum Abkühlen (2-2) des CO₂-reichen Fluids, welches das Gefrierschutzmittel enthält, einen Phasenabscheider (2-3), um dem abgekühlten Fluid Wasser zu entziehen, eine Entgasungskolonne (2-4), Mittel, um einen zweiten Teil des CO₂-reichen Fluids, das Wasser enthält, in den Sumpf der Kolonne zu leiten, Mittel, um Wasser (2-04) vom Phasenabscheider in den Kopf der Kolonne zu leiten, Mittel, um das Gas aus dem Kolonnenkopf zu leiten, um es mit dem ersten Teil stromaufwärts der Abkühlungsmittel zu mischen, und Mittel, um das im Wasser gereinigte, abgekühlte Fluid zu dem Verdichter zu leiten.

11. Gerät nach Anspruch 10, wobei der Verdichter aus Carbonstahl oder aus schwachlegiertem Stahl ist.

12. Gerät nach einem der Ansprüche 10 und 11, umfassend einen Verdichter (2-5), um den zweiten Teil stromaufwärts der Kolonne (2-4) zu verdichten.

## Claims

1. Process for compressing a water-containing, CO₂-rich fluid, wherein the CO₂-rich fluid is compressed in a compressor (5), upstream of the compression step, the water-containing, CO₂-rich fluid is divided into two, an antifreeze is injected into a first portion of the water-containing, CO₂-rich fluid, a second portion of the CO₂-rich fluid is sent to the bottom of a degassing column (2-4), and an overhead gas from the column is mixed with the first portion of the antifreeze-containing, CO₂-rich fluid, the first portion is cooled then sent to a phase separator (2-3), water (2-04) containing antifreeze is extracted from the phase separator and sent to the top of the column, and the cooled fluid (2-00) which is purified of water in the phase separator is compressed in the compressor.

2. Process according to claim 1, wherein the compressor (5) is made of carbon steel or low-alloy steel.

3. Process according to any of the preceding claims, wherein the water containing antifreeze is treated in the column (2-4) in order to extract therefrom the majority of the antifreeze (2-01) which is recycled upstream of the cooling step.

4. Process according to any of the preceding claims, wherein, downstream of the compressor (5), the compressed fluid is separated at a temperature below the freezing point of water 0 °C, preferably less than -10 °C, without having been dried by adsorption upstream.

5. Process according to claim 4, wherein antifreeze-containing, water-rich condensates (2-05) are recovered during the separation at a temperature below 0 °C, and the antifreeze is recycled after extraction upstream of the cooling step.

6. Process according to claim 4, wherein antifreeze-containing, water-rich condensates (2-05) are recovered during the separation at a temperature below -10 °C, and the antifreeze is recycled after extraction upstream of the cooling step.

7. Process according to either claim 5 or claim 6, wherein the antifreeze is extracted in the column (2-4).

8. Process according to any of the preceding claims, wherein the CO₂-rich fluid (1-00) contains less than 100 ppm vol. of sulphur oxides, or less than 2,000 ppm vol. of sulphur oxides, or even less than 20,000 ppm vol. of sulphur oxides.

9. Process according to any of the preceding claims, wherein the gas at the inlet of the phase separator (2-3) is at between -35 °C and -15 °C, or even between -25 °C and -15 °C.

10. Apparatus for compressing a water-containing, CO₂-rich fluid, comprising a compressor (5), **characterised in that** said apparatus comprises, upstream of the compressor, an antifreeze inlet line (2-03) for injecting the antifreeze into a first portion of the water-containing, CO₂-rich fluid, means (2-2) for cooling the antifreeze-containing, CO₂-rich fluid, a phase separator (2-3) for extracting water from the cooled fluid, a degassing column (2-4), means for sending a second portion of the water-containing, CO₂-rich fluid to the bottom of the column, means for sending water (2-04) from the phase separator to the top of the column, means for sending the overhead gas from the column to be mixed with the first portion upstream of the cooling means, and means for sending the cooled fluid which is purified of water to the compressor.

11. Apparatus according to claim 10, wherein the compressor is made of carbon steel or low-alloy steel.

12. Apparatus according to either claim 10 or claim 11, comprising a compressor (2-5) for compressing the second portion upstream of the column (2-4 ).
